# EUROPEAN PATENT SPECIFICATION

(11) **EP 2 731 483 B1**
(45) Date of publication and mention of the grant of the patent: **08.04.2015**
(21) Application number: 12737889.1
(22) Date of filing: 02.07.2012
(51) Int. Cl.: A47J 43/07

(54) **SEAL GUARD FOR WHISK TYPE MILK FROTHER**
SCHUTZELEMENT FÜR DIE DICHTUNG IN EINEM QUIRL ZUM AUFSCHÄUMEN VON MILCH
UN ÉLÉMENT DE PROTECTION POUR UN JOINT D'ÉTANCHÉITÉ DANS UN DISPOSITIF MÉLANGEUR POUR FAIRE MOUSSER DU LAIT

(30) Priority: 12.07.2011 EP 11173585; 12.07.2011 US 201161506871 P
(43) Date of publication of application: 21.05.2014
(73) Proprietor: Koninklijke Philips N.V., 5656 AE Eindhoven (NL)
(72) Inventor: SLOT, Arjan, NL-5656 AE Eindhoven (NL); KLOKMAN, Pieter Herman, NL-5656 AE Eindhoven (NL); NIEHAUS, Mathijs, NL-5656 AE Eindhoven (NL); OLIVIER, Falco Gerrit, NL-5656 AE Eindhoven (NL)
(74) Representative: Coops, Peter
(86) International application number: PCT/IB2012/053358
(87) International publication number: WO 2013/008127

(56) References cited:
- US-A- 5 848 841
- US-A1- 2002 075 752
- US-A1- 2009 266 240

## Description

### FIELD OF THE INVENTION

The present invention relates to a seal guard for screening a drive shaft seal of an apparatus for frothing liquid foodstuff, in particular milk.

Document US-A-2002 075752 discloses a drive shaft seal of a whisk type milk frother.

### BACKGROUND

An apparatus for frothing liquid foodstuff may include a housing containing an electric motor, a drive shaft that is connected to the motor and that extends outwardly from the housing, and a frothing element that is connected to the free outer end of the drive shaft. The frothing element may typically be in the form of a toroidal coil that extends around the axial direction of the shaft, guided on an annular wire holder. However, types of frothing elements other than a toroidal coil may also be employed. To froth liquid foodstuff, the apparatus may be held above an open container containing the foodstuff, with the frothing element extending into the liquid mass. Then the motor may be made to spin the drive shaft and the frothing element connected thereto, so as to whisk air into the liquid and create a froth of finely divided air bubbles and liquid. Although an apparatus of the described type is generally suitable for frothing various kinds of liquid foodstuff, it is most commonly used for frothing milk and will therefore hereafter be referred to as a whisk type milk frother.

To allow the (rotating) drive shaft to extend outwardly from the housing while preventing water and other contaminants from entering into it, the apparatus may include a flexible seal that sealingly encloses the drive shaft at the point where it exits the housing. The seal may for example take the form of a patch of silicone that is fitted with a hole having a diameter that is slightly smaller than an outer diameter of the drive shaft, such that inserting the drive shaft through the hole proofs the housing against the ingress of moist and dirt. Although economical, a drawback of such a seal is that it may easily give way to mechanical force, which may create a (temporary) gap between the seal and the drive shaft through which contaminants may penetrate into the housing. Such mechanical force may in particular be exercised on the seal during cleaning of the milk frother.

### SUMMARY OF THE INVENTION

It is an object of the present invention to provide for a device that may be used in an otherwise known whisk type milk frother for enhancing or safeguarding the operation of a seal that proofs the motor housing at a drive shaft exit location.

It is a further object of the present invention to provide for a whisk type milk frother whose motor housing, and in particular the sealed drive shaft exit location thereof, is able to withstand cleaning without incurring leakage.

Accordingly, a first aspect of the invention is directed to a seal guard suitable for incorporation in a whisk type milk frother. The seal guard comprises a hub bushing defining an elongate, preferably substantially cylindrical, drive shaft passage that has a central axis which extends in an axial direction pointing from a first end of the hub bushing to a second end of the hub bushing. The seal guard further comprises an annular rim that, seen in the axial direction, is disposed downstream of the second end of the hub bushing, and a plurality of spokes interconnecting the second end of the hub bushing and the annular rim.

The presently disclosed seal guard aims to protect the drive shaft exit location of a milk frother's motor housing against two distinct cleaning treatments: rinsing and brushing.

Rinsing down the motor housing by holding it in a strong water jet running from a faucet may cause the flexible seal at the drive shaft exit location to bend away from the drive shaft so as to allow water to drip or even pour into the motor housing. The risk of such leakage is particularly imminent when the water jet is directed parallel to the drive shaft axis. The hub bushing of the seal guard is configured to be mounted, e.g. press fitted, onto the drive shaft of a milk frother, at a location outside of the motor housing, preferably close to the seal. In its mounted position the hub bushing locally increases the effective diameter of the drive shaft. Consequently, the hub bushing blocks a water jet running parallel and adjacent to the drive shaft, thus preventing it from hitting the seal dead on.

Brushing the motor housing of a milk frother down is another cleaning act that may lead to temporal, and sometimes permanent, deformation of the seal. This is especially true when a brush with stiff or rough bristles is used, which, during scrubbing of the flexible seal, may easily distort and even damage it. To prevent this, the seal guard according to the present invention includes a protective cage formed by the hub bushing, the spokes and the annular rim. The annular rim may be thought of as the base of the cage, which may be placed around the seal, and typically close to or in abutment with the motor housing. Spokes extend between the annular rim and the (central) hub bushing to form bars that shield the seal location from direct rubbing contact with a brush. At the same time, the cage has an open structure that allows it to be cleaned easily by gentle rinsing (using water running in a direction non-parallel to the drive shaft) and/or brushing.

In one embodiment of the seal guard, an outer diameter of the hub bushing tapers off in an anti-axial direction.

As defined above, the axial direction of the seal guard extends from a first end of the hub bushing to the second end of the hub bushing. When the seal guard is mounted on the drive shaft of a milk frother, the axial direction points from the free or remote end of the drive shaft (which may be fitted with the frothing element), along the drive shaft, into the motor housing. The anti-axial direction thus points in the opposite direction. A taper in the anti-axial direction causes water, running adjacent the drive shaft in the axial direction (i.e. towards the seal), to be deflected outward with respect to the drive shaft, and thus off its crash course with the seal.

In another embodiment of the seal guard, the second end of the hub bushing includes a shoulder that defines a smooth concave curve which includes an angle in the range of 135 ± 20 degrees.

Instead of, or in addition to, providing the hub bushing with a gradual anti-axial taper, the hub bushing may be provided with a shoulder that, seen in the axial direction, relatively quickly, e.g. within an axial distance of about 10 mm, significantly increases the outer diameter of the hub bushing, e.g. by at least 50%. Seen in the axial direction, the shoulder or diameter increment of the hub bushing may preferably define a smooth concave curve that may be followed by water impinging on the shoulder in a generally axial direction so as to divert the water outward from the central axis without excessive splashing. The smooth curve may preferably include an angle in the range of 135 ± 20 degrees, such that a tangent to the hub bushing in a plane comprising the central axis sweeps through an angle in the range of 25 (=180-(135+20)) - 65 (=180-(135-20)) degrees as it passes the shoulder.

In yet another embodiment of the seal guard, the spokes are convexly curved such that they bulge outwardly with respect to a geometrical center of the annular rim.

The spokes of the seal guard form a grating that serves to keep the bristles of a brush making scrubbing strokes near the drive shaft exit location at bay. The screening action of the spokes is more effective as the spokes extend at a larger distance from the seal location. Accordingly, the spokes may preferably bulge outwardly with respect of a geometrical center of the annular rim, which geometrical center, in a mounted position of the seal guard, may substantially coincide with the seal to be protected.

In still another embodiment, the plurality of spokes includes at least 3 spokes, and preferably at least 5 spokes. Three spokes, preferably radiating at mutual angles of 120 degrees, is considered to be the minimum for proper protection, while 4-6 spokes, in particular 5 spokes, is considered to be an optimal trade-off between seal protection and cleanability of the seal guard. The plurality of spokes may preferably not include more than 10 spokes, since too many spokes may effectively close off the cage of the seal guard, thereby rendering it difficult or impossible to clean.

According to an elaboration of the seal guard the spokes may, seen along the axial direction, radiate or spread out evenly from the (second end of the) hub bushing, so as to from a cage/grating that makes effective use of the available spokes to protect the seal location all around the central axis. In addition, the hub bushing as such may preferably be rotationally symmetric (asymmetries are bound to lead to irregularities in the diversion of an axially directed water jet, and thus to splashing), such that the seal guard as a whole possesses *n*-fold rotational symmetry with respect to the central axis, *n* being the number of provided spokes.

According to a further embodiment, the annular rim of the seal guard, which may be circular but need not be, extends in a plane that is oriented substantially perpendicular to the axial direction. The annular rim may preferably be attached to the hub bushing such that the central axis of the hub bushing extends substantially through a geometrical center of the annular rim, thus defining the location at which, in a mounted position, the seal of the milk frother's motor housing may be received.

In one embodiment the seal guard is manufactured at least partially from plastic, and/or in one piece, for example by means of injection moulding. The one piece design may improve the robustness of the seal guard, while the injection moulding process may enable the economic manufacture thereof.

A second aspect of the present invention is directed to a whisk type milk frother. The milk frother includes a housing containing an electric motor. The milk frother further includes a drive shaft, an inner portion of which (i.e. a portion disposed inside the housing) is connected to the electric motor, and an outer portion of which (i.e. a portion disposed outside the housing) extends from a drive shaft exit location at the housing. The milk frother also includes a frothing element or whisk connected to the outer portion of the drive shaft, a flexible seal that proofs the drive shaft exit location, and a seal guard according to the first aspect of the invention, which seal guard is mounted onto the drive shaft such that the drive shaft extends through the drive shaft passage, and the annular rim encircles the seal.

In one embodiment of the milk frother, the drive shaft and the seal guard may have been made in one piece. In another embodiment, the drive shaft and the seal guard may have been manufactured separately. In such latter embodiment, the seal guard may preferably be mounted onto the drive shaft by means of press fitting. This naturally ensures that no gaps exist between the seal guard and the drive shaft in which dirt may accumulate, and prevents the seal guard from unintentionally sliding along the drive shaft during cleaning.

These and other features and advantages of the invention will be more fully understood from the following detailed description of certain embodiments of the invention, taken together with the accompanying drawings, which are meant to illustrate and not to limit the invention.

### BRIEF DESCRIPTION OF THE DRAWINGS

Fig. 1 is a schematic perspective view of an exemplary embodiment of a seal guard according to the present invention;
Fig. 2 is a schematic cross-sectional side view of the seal guard shown in Fig. 1;
Fig. 3 is a schematic perspective view of an exemplary embodiment of a milk frother comprising the seal guard shown in Figs. 1 and 2; and
Fig. 4 is a schematic cross-sectional side view of a detachable lid of the milk frother shown in Fig. 3.

### DETAILED DESCRIPTION

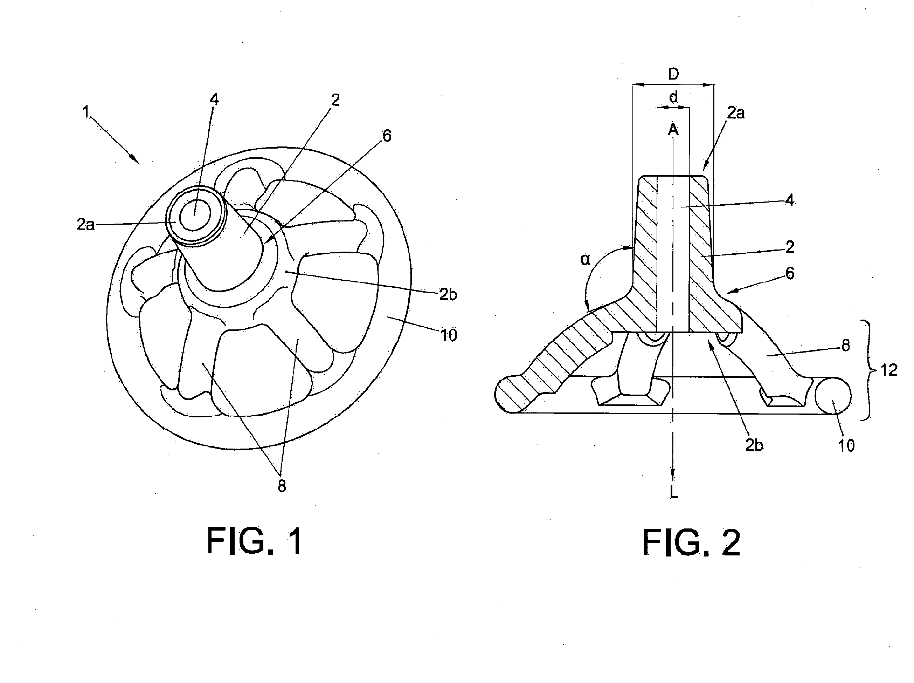

Figs. 1 and 2 schematically illustrate in a perspective view and in a cross-sectional side view, respectively, an exemplary embodiment of a seal guard 1 according to the present invention. The construction of the seal guard 1 will be clarified below in general terms with reference to both Fig. 1 and 2.

A seal guard 1 according to the present invention may comprise a hub bushing 2 defining a drive shaft passage 4 that has a central axis A which extends in an axial direction L pointing from a first end 2a of the hub bushing 2 to a second end 2b of the hub bushing 2. The seal guard 1 may further comprise an annular rim 10 that, seen in the axial direction L, is disposed downstream of the second end 2b of the hub bushing 2, and a plurality of spokes 8 interconnecting the second end 2b of the hub bushing 2 and the annular rim 10.

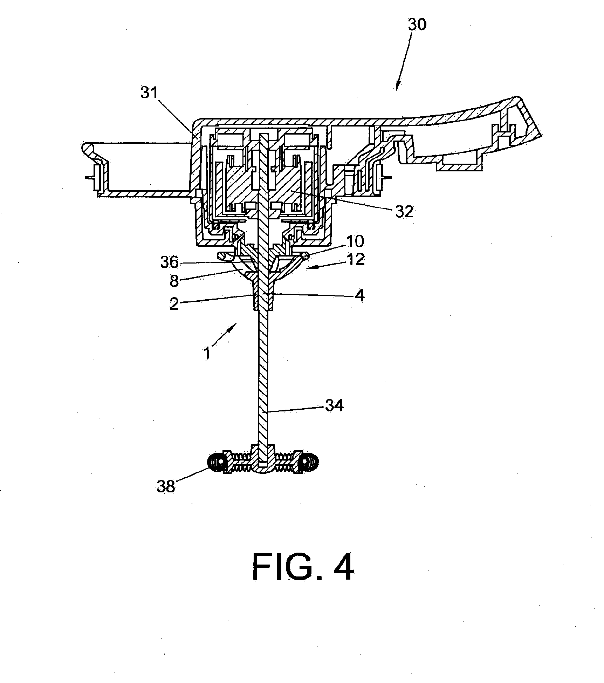

The elongate drive shaft passage 4 of the hub bushing 2 may have a substantially cylindrical shape to facilitate mounting of the hub bushing 2 on a generally cylindrical drive shaft (as shown in Fig. 4). It is contemplated, however, that other drive shaft passage profiles, e.g. prismatic, may be used as well, in particular in combination with correspondingly shaped drive shafts. Since the seal guard 1 may preferably be connected to a drive shaft by means of an interference fit, e.g. through press fitting, in order to enable a seamless fixed connection without further fastening means, an inner diameter *d* of the drive shaft passage 4 may preferably be chosen slightly smaller than an outer diameter of the drive shaft on which the seal guard 1 is to be mounted. In general, an inner diameter *d* of the drive shaft passage 4 through the hub bushing 2 may be in the range of 1-10 mm, and preferably in the range of 2-5 mm.

As is best visible in Fig. 2, (an outer diameter D of) at least an axial portion of the hub bushing 2 may taper off in an anti-axial direction, i.e. a direction parallel to the central axis A and extending from the second end 2b of the hub bushing 2 towards the first end 2a of the hub bushing 2, and thus opposite to the axial direction indicated with the letter L. The taper may preferably correspond to an angle of inclination, included between the tapering outer surface of the bushing 2 and the central axis A, in the range of 0-10 degrees, and more preferably 0-5 degrees. The taper in the anti-axial direction will cause water, running adjacent the central *axis A* in the axial direction *L,* to be gradually deflected outward with respect to the drive shaft. An average diameter of the tapering axial portion of the hub bushing 2 may typically be in the range of 4-10 mm.

A second end 2b of the hub bushing 2 may include a shoulder 6 that, seen in the axial direction, relatively abruptly, e.g. within an axial distance of about 10 mm, significantly increases the outer diameter *D* of the hub bushing 2, e.g. by at least 50%. Seen in the axial direction *L*, the shoulder 6 or diameter increment of the hub bushing 2 may preferably define a smooth concave curve that may be followed by water impinging on the shoulder 6 in a generally axial direction *L* so as to quickly divert the water outward from the central axis *A*, but without excessive splashing. The smooth curve may preferably include an angle α in the range of 135 ± 20 degrees, such that a tangent to the hub bushing 2 in a plane comprising the central axis *A* sweeps through an angle in the range of 25 (=180-(135+20))-65 (=180-(135-20)) degrees as it passes the shoulder 6.

The spokes 8 of the seal guard 1 may be convexly curved, as shown in the depicted embodiment of Figs. 1-2, such that they bulge outwardly with respect to a geometrical center of the annular rim 10. In use, the outwardly bulging shape of the spokes 8 increases their effectiveness in keeping the bristles of a scrubbing brush away from the geometrical center of the annular rim 10, which may coincide with the location of the seal to be protected by the seal guard 1 (see Fig. 4).

The number of spokes 8 may vary for different embodiments of the seal guard 1. However, three spokes 8 is considered to be the minimum for proper seal protection, while four to six spokes, and in particular five spokes (as in the depicted embodiment), is considered to be an optimal trade-off between protection by and cleanability of the seal guard 1. A plurality of spokes 8 may preferably not include more than 10 spokes, since too many spokes may effectively close off the protective cage 12 defined by of the seal guard 1, thereby rendering it difficult or impossible to clean. Seen along the axial direction L, the spokes 8 may preferably radiate or spread out evenly from the (second end 2b of the) hub bushing 2, so as to from a cage/grating that makes effective use of the available spokes to protect the geometrical center of the rim/seal location all around the central axis *A.* In addition, the hub bushing 2 as such may preferably be rotationally symmetric (asymmetries are bound to lead to irregularities in the diversion of an axially directed water jet, and thus to splashing), such that the seal guard 1 as a whole possesses *n*-fold rotational symmetry with respect to the central axis *A, n* being the number of provided spokes.

The annular rim 10 may typically extend in a plane that is oriented substantially perpendicular to the axial direction *L*, and be connected to the hub bushing 2 such that the central axis *A* of the hub bushing 2 extends through the geometrical center thereof. This geometrical center then defines the heart of the protective cage 12 formed by the seal guard 1, and thus the optimal location at which, in a mounted position, the seal of a milk frother's motor housing may be received. The annular rim 10 of the guard 1 may typically be circular, as shown. In some embodiments, however, it may have a different shape, for instance polygonal.

Referring to the seal guard 1 in the orientation in which it is shown in Fig.2, an axial distance between (a lower surface of) the second end 2b of the hub bushing 2 and (a lower surface) of the annular rim 10, corresponding to a height of the protective cage 12, may typically be in the range of 0.5 - 4 cm, depending on the size of the seal to be received in the cage 12.

The seal guard 1 may be manufactured at least partially from plastic, and/or in one piece, for example by means of injection moulding. The one piece design may improve the robustness of the seal guard, while the injection moulding process may enable the economic manufacture thereof.

Now that the construction of the seal guard 1 according to the present invention per se has been elucidated in some detail, attention is invited to the practical application in a milk frother.

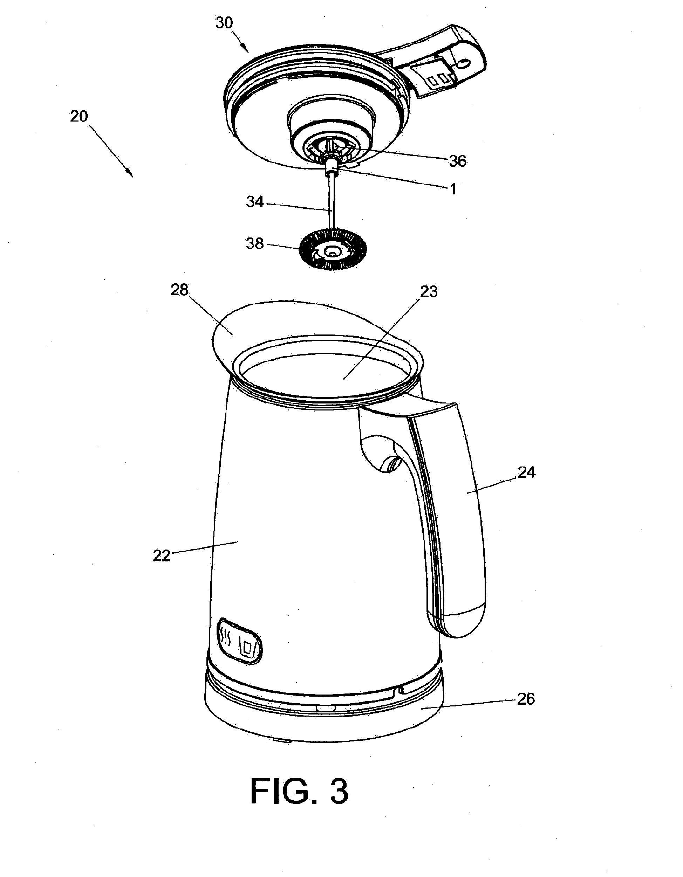

Fig. 3 schematically shows an exemplary milk frother 20 according to the present invention. It includes a power base 26, a jug 22 that is detachably connectable to the power base 26, and a lid 30 that is detachably connectable to the jug 22. The power base 26 may be connectable to the power mains through a power cord and plug (not shown). The jug 22 and the power base 26 may further share an electric connector via which power may be transferred from the power base to the jug 22 when the latter is placed on top of the power base 26, as shown. The preferably cordless jug 22 may include an inner jug 23 for holding milk, a handle 24 provided on an outer side of the jug 22 to facilitate handling thereof, and a spout 28 to enable one to comfortably pour out frothed milk from the inner jug 23. The lid 30 is connectable to the top of the jug 22 to close off the upper opening of the inner jug 23. The milk frother 20 is configured such that when it is properly assembled for operation, i.e. when the jug 22 is placed on the power base 26 and the lid 30 closes off the inner jug 23, electronics in the lid 30 may be powered from the power base 26

The construction of the lid 30 is best elucidated with reference to both Fig. 3, which shows the lid 30 in a perspective view, and Fig. 4, which shows the lid 30 in a cross-sectional side view. The lid 30 defines a housing 31 containing an electric motor drive 32. The lid 30 further includes an elongate drive shaft 34 having a inner axial portion that extends within the motor housing 31 and an outer axial portion that extends outside the motor housing 31. The inner axial portion of the drive shaft 34 is operably connected to the motor drive 32, while an end of the outer axial portion, distal to the motor housing 31, is provided with a frothing element 38 in the form of a toroidal coil that extends around the axial direction of the drive shaft 34. The drive shaft exit location, i.e. the location where the drive shaft 34 exits the motor housing, is marked by a flexible silicone seal 36 that sealingly encloses the drive shaft 34 and so proofs the motor housing 31. To safeguard the operation of the seal 36, a seal guard 1 has been press fitted on the outer axial portion of the drive shaft 34. The seal guard 1 is disposed adjacent the motor housing 31, such that the annular rim 10 encircles the drive shaft exit location, and the seal 36 is received inside the protective cage 12.

After use, one may clean the lid 30 of the milk frother 20 by detaching it from the jug 22 and rising it under tap water. If, in doing so, a strong water jet would be directed in an anti-axial direction along the drive shaft 34, the tapering hub bushing 2 of the seal guard would deflect the water stream radially outward and prevent it from impacting on the seal 36. In addition, one may brush the lid 30, including the seal guard 1 itself, to remove stuck milk residue. The protective cage 12 of the seal guard 1 will then shield the seal 36 at its center from direct and forceful rubbing contact with the brush: the spokes 8 of the cage 12 will stop the bristles of the brush from rubbing over the seal 36 and disrupting it. Accordingly, the seal 36 is safely yet cleanably disposed in the protective sphere of the seal guard 1.

Although illustrative embodiments of the present invention have been described above, in part with reference to the accompanying drawings, it is to be understood that the invention is not limited to these embodiments.

## Claims

1. A seal guard (1) for incorporation in a whisk type milk frother (20), including:
- a hub bushing (2) defining an elongate drive shaft passage (4) that has a central axis (*A*) which extends in an axial direction (L) pointing from a first end (2a) of the hub bushing to a second end (2b) of the hub bushing;
- an annular rim (10) that, seen in the axial direction (L), is disposed downstream of the second end (2b) of the hub bushing (2); and
- a plurality of spokes (8) interconnecting the second end (2b) of the hub bushing (2) and the annular rim (10).

2. The seal guard according to claim 1, wherein an outer diameter (D) of the hub bushing (2) tapers off in an anti-axial direction.

3. The seal guard according to claim 1 or 2, wherein the second end (2b) of the hub bushing (2) includes a shoulder (6) that defines a smooth concave curve which includes an angle (α) in the range of 135 ± 20 degrees.

4. The seal guard according to any of the claims 1-3, wherein the spokes (8) are convexly curved such that they bulge outwardly with respect to a geometrical center of the annular rim (10).

5. The seal guard according to any of the claims 1-4, wherein the plurality of spokes (8) includes at least 3 spokes, and preferably at least 5 spokes.

6. The seal guard according to any of the claims 1-5, wherein the plurality of spokes (8) does not include more than 10 spokes.

7. The seal guard according to any of the claims 1-6, wherein the annular rim (10) extends in a plane that is oriented perpendicular to the axial direction (L).

8. The seal guard according to any of the claims 1-7, wherein the central axis *(A)* extends substantially through a geometrical center of the annular rim (10).

9. The seal guard according to any of the claims 1-8, wherein said seal guard (1) possesses *n*-fold rotational symmetry with respect to the central axis (*A*)*, n* being the number of spokes (8).

10. The seal guard according to any of the claims 1-9, wherein said seal guard (1) is at least partially manufactured from plastic.

11. The seal guard according to any of the claims 1-10, wherein said seal guard (1) is made in one piece.

12. The seal guard according to any of the claims 1-11, wherein said seal guard (1) is manufactured by injection moulding.

13. The seal guard according to any of the claims 1-12, wherein an inner diameter (*d*) of the drive shaft passage (4) through the hub bushing (2) is in the range 2-5 mm.

14. The seal guard according to any of the claims 1-13, wherein an average outer diameter (D) of the hub bushing (2) over a length thereof is at least twice an inner diameter (*d*) of the drive shaft passage.

15. A whisk type milk frother (20), comprising:
- a housing (31) containing an electric motor (32);
- a drive shaft (34), an inner portion of which is connected to the electric motor (32), and an outer portion of which extends from a drive shaft exit location at the housing;
- a frothing element (38) connected to the outer portion of the drive shaft (34);
- a seal (36) that proofs the drive shaft exit location; and
- a seal guard (1) according to any of the claims 1-14, which seal guard is mounted onto the drive shaft (34) such that the drive shaft extends through the drive shaft passage (4), and the annular rim (10) encircles the seal (36).

## Patentansprüche

1. Dichtungsschutz (1) zum Einbau in einen quirlartigen Milchaufschäumer (20), umfassend:
- eine, eine längliche Antriebswellendurchführung (4) definierende Nabenbuchse (2), die eine zentrale Achse (*A*) aufweist, welche sich in einer von einem ersten Ende (2a) der Nabenbuchse zu einem zweiten Ende (2b) der Nabenbuchse zeigenden axialen Richtung (L) erstreckt;
- einen ringförmigen Rand (10), der, in der axialen Richtung (L) gesehen, dem zweiten Ende (2b) der Nabenbuchse (2) nachgelagert ist; sowie
- mehrere Nabenarme (8), die das zweite Ende (2b) der Nabenbuchse (2) und den ringförmigen Rand (10) miteinander verbinden.

2. Dichtungsschutz nach Anspruch 1, wobei ein Außendurchmesser (D) der Nabenbuchse (2) in einer antiaxialen Richtung abnimmt.

3. Dichtungsschutz nach Anspruch 1 oder 2, wobei das zweite Ende (2b) der Nabenbuchse (2) einen Ansatz (6) enthält, der eine gleichmäßige konkave Kurve definiert, die einen Winkel (*α*) in dem Bereich von 135 ± 20 Grad einschließt.

4. Dichtungsschutz nach einem der Ansprüche 1-3, wobei die Nabenarme (8) so konvex gebogen sind, dass sie sich gegenüber einem geometrischen Mittelpunkt des ringförmigen Randes (10) nach außen wölben.

5. Dichtungsschutz nach einem der Ansprüche 1-4, wobei die mehreren Nabenarme (8) mindestens 3 Nabenarme, vorzugsweise mindestens 5 Nabenarme, enthalten.

6. Dichtungsschutz nach einem der Ansprüche 1-5, wobei die mehreren Nabenarme (8) nicht mehr als 10 Nabenarme enthalten.

7. Dichtungsschutz nach einem der Ansprüche 1-6, wobei sich der ringförmige Rand (10) in einer Ebene erstreckt, die senkrecht zu der axialen Richtung (L) ausgerichtet ist.

8. Dichtungsschutz nach einem der Ansprüche 1-7, wobei sich die zentrale Achse (*A*) im Wesentlichen durch einen geometrischen Mittelpunkt des ringförmigen Randes (10) erstreckt.

9. Dichtungsschutz nach einem der Ansprüche 1-8, wobei der Dichtungsschutz (1) eine *n*-fache Rotationssymmetrie gegenüber der zentralen Achse (*A*) besitzt, *wobei n* die Anzahl von Nabenarmen (8) darstellt.

10. Dichtungsschutz nach einem der Ansprüche 1-9, wobei der Dichtungsschutz (1) zumindest teilweise aus Kunststoff hergestellt ist.

11. Dichtungsschutz nach einem der Ansprüche 1-10, wobei der Dichtungsschutz (1) in einem Stück hergestellt wird.

12. Dichtungsschutz nach einem der Ansprüche 1-11, wobei der Dichtungsschutz (1) durch Spritzgießen hergestellt wird.

13. Dichtungsschutz nach einem der Ansprüche 1-12, wobei ein Innendurchmesser (*d*) der Antriebswellendurchführung (4) durch die Nabenbuchse (2) in dem Bereich von 2-5 mm liegt.

14. Dichtungsschutz nach einem der Ansprüche 1-13, wobei ein durchschnittlicher Außendurchmesser (*D*) der Nabenbuchse (2) über eine Länge derselben mindestens zweimal einen Innendurchmesser *(d)* der Antriebswellendurchführung ausmacht.

15. Quirlartiger Milchaufschäumer (20), umfassend:
- ein Gehäuse (31), das einen elektrischen Motor (32) enthält;
- eine Antriebswelle (34), von der ein Innenteil mit dem elektrischen Motor (32) verbunden ist und sich ein Außenteil von einer Antriebswellenaustrittsposition an dem Gehäuse aus erstreckt;
- ein Aufschäumelement (38), das mit dem Außenteil der Antriebswelle (34) verbunden ist;
- eine Dichtung (36), welche die Antriebswellenaustrittsposition abdichtet; sowie
- einen Dichtungsschutz (1) nach einem der Ansprüche 1-14, wobei der Dichtungsschutz auf der Antriebswelle (34) so angebracht ist, dass sich die Antriebswelle durch die Antriebswellendurchführung (4) erstreckt und der ringförmige Rand (10) die Dichtung (36) umgibt.

## Revendications

1. Élément de protection de joint d'étanchéité (1) à incorporer dans un dispositif mélangeur pour faire mousser du lait (20), comprenant :
- une bague de moyeu (2) définissant un passage d'arbre d'entraînement allongé (4) qui comporte un axe central (A) s'étendant dans un sens axial (L) pointant d'une première extrémité (2a) de la bague de moyeu vers une deuxième extrémité (2b) de la bague de moyeu ;
- une jante annulaire (10) qui, en vue dans le sens axial (L), est disposé en aval de la deuxième extrémité (2b) de la bague de moyeu (2) ; et
- une pluralité de rayons (8) interconnectant la deuxième extrémité (2b) de la bague de moyeu (2) et la jante annulaire (10).

2. Élément de protection de joint d'étanchéité selon la revendication 1, dans lequel un diamètre extérieur (D) de la bague de moyeu (2) s'effile dans un sens anti-axial.

3. Élément de protection de joint d'étanchéité selon la revendication 1 ou 2, dans lequel la deuxième extrémité (2b) de la bague de moyeu (2) comprend un épaulement (6) qui définit une courbe concave lisse présentant un angle (α) dans la plage de 135 ± 20 degrés.

4. Élément de protection de joint d'étanchéité selon l'une quelconque des revendications 1 à 3, dans lequel les rayons (8) sont incurvés de manière convexe en faisant saillie vers l'extérieur par rapport à un centre géométrique de la jante annulaire (10).

5. Élément de protection de joint d'étanchéité selon l'une quelconque des revendications 1 à 4, dans lequel la pluralité de rayons (8) comprend au moins 3 rayons, et de préférence au moins 5 rayons.

6. Élément de protection de joint d'étanchéité selon l'une quelconque des revendications 1 à 5, dans lequel la pluralité de rayons (8) ne comprend pas plus de 10 rayons.

7. Élément de protection de joint d'étanchéité selon l'une quelconque des revendications 1 à 6, dans lequel la jante annulaire (10) s'étend dans un plan orienté perpendiculairement au sens axial (L).

8. Élément de protection de joint d'étanchéité selon l'une quelconque des revendications 1 à 7, dans lequel l'axe central (A) s'étend sensiblement à travers un centre géométrique de la jante annulaire (10).

9. Élément de protection de joint d'étanchéité selon l'une quelconque des revendications 1 à 8, dans lequel ledit élément de protection de joint d'étanchéité (1) présente une symétrie rotationnelle à n plis par rapport à l'axe central (A), n étant le nombre de rayons (8).

10. Élément de protection de joint d'étanchéité selon l'une quelconque des revendications 1 à 9, dans lequel ledit élément de protection de joint d'étanchéité (1) est au moins partiellement fabriqué en plastique.

11. Élément de protection de joint d'étanchéité selon l'une quelconque des revendications 1 à 10, dans lequel ledit élément de protection de joint d'étanchéité (1) est réalisé en une seule pièce.

12. Élément de protection de joint d'étanchéité selon l'une quelconque des revendications 1 à 11, dans lequel ledit élément de protection de joint d'étanchéité (1) est fabriqué par moulage par injection.

13. Élément de protection de joint d'étanchéité selon l'une quelconque des revendications 1 à 12, dans lequel un diamètre intérieur (d) du passage d'arbre d'entraînement (4) à travers la bague de moyeu (2) est dans la plage de 2 à 5 mm.

14. Élément de protection de joint d'étanchéité selon l'une quelconque des revendications 1 à 13, dans lequel un diamètre extérieur (D) moyen de la bague de moyeu (2) sur une longueur de celle-ci est égal à au moins deux fois un diamètre intérieur (d) du passage d'arbre d'entraînement.

15. Dispositif mélangeur pour faire mousser du lait (20), comprenant :
- un logement (31) contenant un moteur électrique (32) ;
- un arbre d'entraînement (34), dont une portion intérieure est reliée au moteur électrique (32), et dont une portion extérieure s'étend à partir d'un emplacement de sortie d'arbre d'entraînement au niveau du logement ;
- un élément de formation de mousse (38) relié à la portion extérieure de l'arbre d'entraînement (34) ;
- un joint d'étanchéité (36) qui assure l'étanchéité de l'emplacement de sortie d'arbre d'entraînement ; et
- un élément de protection de joint d'étanchéité (1) selon l'une quelconque des revendications 1 à 14, lequel élément de protection de joint d'étanchéité est monté sur l'arbre d'entraînement (34) de sorte que l'arbre d'entraînement s'étende à travers le passage d'arbre d'entraînement (4), et la jante annulaire (10) encercle le joint d'étanchéité (36).
